# EUROPEAN PATENT APPLICATION

(11) **EP 1 292 148 A1**
(43) Date of publication of application: **12.03.2003**
(21) Application number: 01830544.1
(22) Date of filing: 17.08.2001
(51) Int. Cl.: H04N 7/24

(54) **Transmission system and method for application to television signal distribution**

(71) Applicant: Aprico, Enrico, 30176 Mestre (Venezia) (IT); Truzzoli, Stefania, 37030 Colognola Ai Colli (Verona) (IT); Campo Dall'Orto, Antonio, 20123 Milano (IT)
(72) Inventor: Aprico, Enrico, 30176 Mestre (Venezia) (IT)
(74) Representative: Siniscalco, Fabio

(57) **Abstract**

Transmission system (1) applicable to television signal contribution. This system is characterized in that it comprises first processing means (3) provided with at least one first input port (34), connectable to a generating station (A) for the television signal, and a first output port (34). The first processing means (3) can be used to supply to the first output port (35), on the basis of the said television signal to be transmitted, an output digital signal in the form of a plurality of packets structured in accordance with a communication protocol of the type of level 3 of the OSI (Open System Interconnection) model. The system (1) is also provided with a packet-switched network (5) having an input (4) connected to the said first output port (35) and permitting the transmission of the said digital signal, in accordance with the said protocol, to an output (16) of the network. In one particular case, the protocol used is the IP protocol (Internet Protocol).

## Description

The present invention relates to a television signal transmission system. In particular, this system is applicable to television signal contribution, in other words to the transmission of the signal from a generating station to a distribution station.

Typically, the generating station is a television studio, while the term "distribution station" denotes both the station responsible for broadcasting the television signal to end users and the station responsible for its distribution to a further contribution system.

For the purposes of the present invention, the term "television signal" denotes an analog or digital signal, corresponding to a video signal only, or corresponding to a signal comprising a video component and an audio component.

In general, the television contribution signal (intended for broadcasting, for example) is a high-quality signal, in other words a signal usable in a professional environment and having a quality higher than that of video signals currently used in other applications such as videotelephony or sending moving images to a user over an Internet network.

The conventional systems used for television signal contribution are based on the use of radio and/or satellite links.

In particular, this transmission may be of the digital type and may therefore require the sampling and quantization of the luminance and chrominance components of the analog video signal. The digital signal produced in this way has a high transmission speed which would require a transmission band which would be unfeasible in the technological context of broadcasting and television contribution. Consequently there is a known way of carrying out a source coding which reduces the redundancy present within an image, or within a plurality of successive images. In satellite transmission, for example, the MPEG-2 (Motion Picture Expert Group) compression system is used.

In some situations, the use of the two aforementioned conventional systems for television contribution is impossible or inconvenient.

For example, it may be the case that the location of the television signal generating station does not permit the installation of aerials and the corresponding towers. In other cases, the signal generating and distribution stations can be located in the same territorial area, and satellite transmission would therefore be too costly for this specific situation.

In addition to these conventional methods, new-generation methods have been implemented for transmitting the video signal over PDH/SDH (Plesiochronous Digital Hierarchy/Synchronous Digital Hierarchy) networks, using suitable encoding equipment which encodes the signal in MPEG-2 and maps it into ATM cells. In other words, these new-generation systems make use of ATM (Asynchronous Transfer Mode) technology, which, as is known, transmits data structured in cells, in other words in units of fixed length, operating at Level 2 of the OSI (Open System Interconnection) model.

The use of ATM technology in television contribution has a limitation due to the necessity of providing dedicated structures; this means that each system is capable of controlling the simultaneous transmission of a single television signal, and also that the same system is not capable of controlling the transmission of signals of a different type.

The object of the present invention is to propose a transmission system which can be used for television signal contribution and which does not have the limitations and disadvantages mentioned above with reference to conventional methods.

The object of the present invention is achieved by a transmission system applicable to television signal contribution, characterized in that it comprises:
- first processing means provided with at least a first input port connectable to a television signal generating station and with a first output port, the said first means being used to supply to the first output port, on the basis of the said television signal to be transmitted, a digital output signal in the form of a plurality of packets structured in accordance with a communication protocol of the level 3 type of the OSI (Open System Interconnection) model,
- a packet-switched network having an input connected to the first output port and such that it permits the transmission according to the said protocol of the said digital signal to an output, the said network having an associated bandwidth including at least one portion reserved for the transmission of the plurality of packets.

The present invention also relates to a transmission method applicable for television signal contribution, the said method being characterized in that it comprises the steps of:
- generating from the said television signal an output digital signal in the form of a plurality of packets structured in accordance with a level 3 communication protocol of the OSI (Open System Interconnection) model; the said plurality of packets being designed to be sent over a packet-switched network having an associated bandwidth,
- reserving a portion of the network bandwidth for the transmission of the plurality of packets,
- transmitting the said output digital signal over the network in accordance with the said protocol.

To enable the invention and its advantages to be understood more clearly, an embodiment of the invention is described below, by way of example and without restrictive intent, and is illustrated in the attached drawings, in which
- Figure 1 shows schematically a transmission system according to a first embodiment of the invention;
- Figure 2 shows schematically a transmission system according to a second embodiment of the invention;
- Figure 3 shows the transmission system of Figure 1 in a redundant form.

The following description uses a terminology whose meaning is well known to those skilled in the art of data communications and networking and, in particular, to those skilled in the art of television.

In particular, reference is made to the OSI (Open System Interconnection) model proposed by the ISO (International Standard Organization) which is intended to provide a common base to promote the coordination of network design activities and the corresponding standardization activities.

As is known, the OSI model, together with the various communication protocols published by the ISO, specifies a network architecture structured in seven levels (or layers), namely the physical layer (or level 1), the data link layer (or level 2), the network layer (or level 3), the transport layer (or level 4), the session layer (or level 5), the presentation layer (or level 6), and the application layer (or level 7).

Each of these levels is associated with a communication protocol identified by the number of the level to which it relates. It should also be noted that the OSI model indicates a plurality of possible protocols for each level.

For example, at level 3 the OSI model indicates three possible protocols:
1) Internetwork Protocol, ISO 8473 (Connectionless), IP (RFC 791); (IP: Internet Protocol; RFC: Request for comments)
2) Packet Level Protocol, CCITT X.25 (Connection) ISO 8208; (CCITT: International Telegraph and Telephone Consultative Committee)
3) CCITT Q.931.

The IP level 3 protocol is currently used on the Internet network.

Where level 4 is concerned, the following protocols are known in the OSI model:
1) CCITT X.225-ISO8327 (Service);
2) ISO 8073 (Connection Mode)-TCP (RFC793);
3) ISO 8802 (Connectionless Mode)-UDP (RFC768)

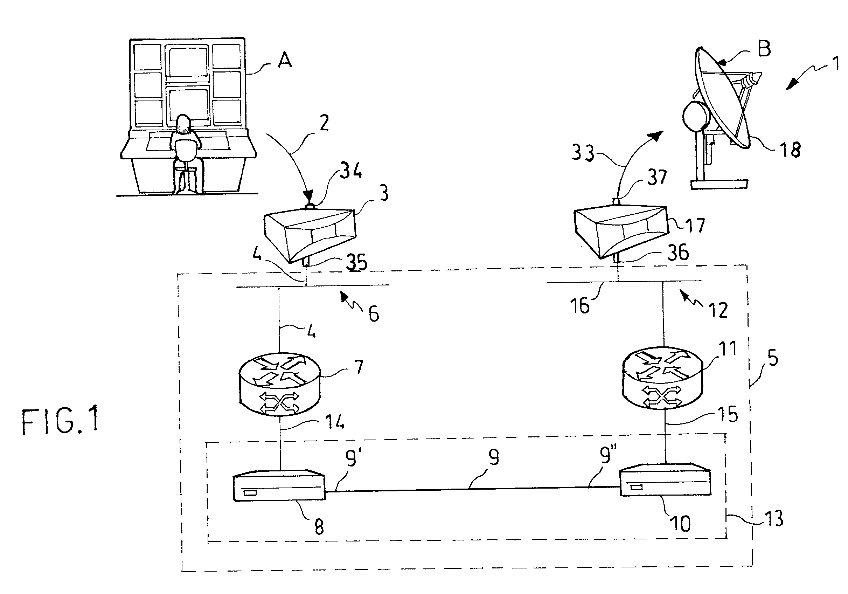

With reference to Figure 1, a description will now be given of a transmission system 1 according to the invention, comprising a generating station or base A for a television signal, including a video signal and, preferably, also an audio signal, and a station or base B for distributing the television signal to further contribution systems or to systems for broadcasting to the individual end users.

The video and audio signals generated at the station A can be digital or analog signals.

The generating station A, for example, located at a television production centre, can be used to generate a video signal which carries the data for luminance, chrominance (in the case of colour television) and the synchronizing and cancellation pulses.

For example, the video signal may be a digital signal in the standard SDI (Serial Digital Interface) format, which has a transmission speed of 270 Mb/s, and the audio signal may be a signal of the analog type.

In particular, the television contribution signal in question is of a quality suitable for television broadcasting. The quality of the television transmission of the broadcast type is correlated with the transmission speed of the signals.

The generating station A is connected, via suitable audio and video signal guide means, to at least one input port 34 of an encoder 3. For example, these guide means comprise two coaxial cables, both indicated schematically in Figure 1 by a single arrow 2.

The encoder 3 is capable of executing a compression operation on the video signal which makes it possible to reduce the redundancy of the video signal, for example, within one image, in order to decrease the bandwidth occupied by it, in other words the transmission speed of the data associated with the signal, usually expressed in Mb/s.

In particular, the compression executed by the encoder 3 conforms to the MPEG-2 (Motion Picture Experts Group-2) compression standard for moving images.

This compression standard is particularly suitable for television broadcasting and makes it possible to record, instead of individual frames, only the variations between one frame and the next. In particular, the MPEG-2 standard can be used to achieve an image compression of as much as 10 to 1, with reduction of the transmission speed, with respect to the initial speed, of values which may, for example, reach the range from 5 to 25 Mb/s, with minimal distortion.

However, it is also possible to use a compression system other than MPEG-2, which may be identified in this technical field, provided that it yields an adequate level of quality.

Additionally, the encoder 3 is capable of executing a compression similar to that of the video signal on the audio signal.

If the audio signal (or the video signal) is analog, the encoder 3 is also capable of executing an analog-digital conversion.

According to one particular embodiment of the invention, the encoder 3 is a VNP 201 encoder/decoder produced by Minerva Networks Inc. (Santa Clara, California, USA), which enables the user to configure various operating specifications, including the encoding speed.

Advantageously, the encoder 3 is suitably configured to allow an operation of segmenting the compressed television signal and structuring it in a plurality of packets. In particular, this structuring in packets is carried out in accordance with a level 3 (or network layer) communication protocol of the OSI model.

The encoder 3 can be used to carry out the said operation of segmentation and structuring in a plurality of packets in such a way as to make the television signal suitable for packet-switched transmission over a suitable network.

It should be noted that the encoder 3 can be implemented not only with the aforesaid encoder Minerva but also with any other processing means, available on the market or produced for the purpose, which is capable of executing the structuring in packets in accordance with a type 3 protocol and with a quality suitable for television contribution. Moreover, the present invention is independent of the type of technology used in the production of the encoder 3, which can be produced, for example, from components mainly of the hardware type or mainly of the software type.

Preferably, the compressed television signal is structured in packets according to the level 3 (network layer) communication protocol known as IP (Internet Protocol).

As is known, the IP protocol is a protocol of the connectionless datagram type which is responsible for segmenting the signals and structuring them in packets, for reassembling the packets, for routing the packets to a network, and for detecting (but not correcting) any errors. The IP packet (called a datagram) has a field dedicated to the data to be transmitted, and is also provided with a header which contains, among other information, a source IP address and a destination IP address.

Additionally, the encoder 3 can structure the plurality of packets according to a level 4 protocol of the OSI model.

Preferably, the system 1 uses the level 4 UDP (User Datagram Protocol), in which the packet is called a user datagram; this protocol is particularly simple.

The aforesaid Minerva Networks encoder 3 can be configured in such a way as to carry out the structuring in packets according to both the IP and the UDP protocols.

With reference to the UDP protocol, it should be noted that this does not provide error correction systems. This means that, if an erroneous packet is found to have been received, it is deleted. It should be noted that, in the context of television contribution, a significant deletion of erroneous packets can lead to the undesired phenomenon of image freeze or the presence of black signals.

The occurrence of these erroneous packets is particularly related to the reliability of the transmission channel used.

In this connection, it has been found experimentally that, with the technologies available at present, such as those which use optical fibres for the transmission channel, it is possible to use the UDP protocol in the context of the system 1 without compromising the quality of the television signal, in other words without the occurrence of significant phenomena of freezing and black signals in the received image.

However, it is possible to provide an optional error correction system, such as an FEC (Forward Error Correction) of the FEC(3,2) type, in the encoder 3.

This error correction system, mentioned by way of example, is known to those skilled in the art, and is based on the principle of transmitting one redundant packet for every two data packets.

As will be clear to a person skilled in the art, the Minerva VNP 201 encoder, or other equivalent processing means available on the market, allows a suitable error correction system to be provided.

It should be noted that the implementation of an error correction system requires an increase of the transmission speed of the signal leaving the encoder 3 with respect to the encoding speed. This increase of the transmission speed (overhead) can be considerable and, in the case of FEC(3,2), 50% of the transmission speed of the signal leaving the encoder 3 is attributable to the error correction system.

It should be noted that, when used conventionally, encoders of a similar type to the Minerva VNP 201 are used for low-profile applications in which video signals intended to be sent to the end users are processed, as, for example, in the context of applications on private local area networks.

Some examples of transmission in which these encoders are conventionally used are transmission relating to surveillance services, distance learning, video on demand (VOD), and telemedicine.

Consequently, the application according to the invention, for processing television signals to be used for contribution, is innovative.

To continue with the description of the system 1, it will be noted that, as shown schematically in Figure 1, an output port 35 of the encoder 3 is connected to a packet-switched network 5, which enables the plurality of packets to be transmitted in accordance with the said protocol.

This packet-switched network 5 is associated with a bandwidth including a portion which can be reserved by the user of the system 1 for transmitting the packets corresponding to the television signal.

It should be noted that, in the context of digital transmission, the term "bandwidth" of a network or of a transmission channel denotes the transmission capacity, in other words the maximum transmission speed of the network or channel (usually expressed in bits per second, or b/s).

The packet-switched network 5 comprises a first local area network (LAN) 6, a first "router" 7, a wide area network (WAN) 13, a second router 11 and a second local area network (LAN) 12.

The first local area network 6 has, for example, a fixed architecture of the bus, star, ring or other type known in the art, and is provided with a transmission means 4 connected to the output port 35 of the encoder 3. This transmission means, which forms an input of the network 5, can be a coaxial cable, a telephone wire pair, an optical fibre, or any other suitable means.

Advantageously, the local area network 6 has an architecture of the Ethernet type and, in particular, of the Fast Ethernet type. As is known, an architecture of the Fast Ethernet type makes it possible to operate at a transmission speed of up to 100 Mb/s.

The local area network 6 is connected to the first router 7 in such a way as to supply the television signal from the encoder 3 to this router.

The first router 7, made by conventional technology for example, is used to route the flow of packets received from the local area network 6 to the second router 11, according to the addresses (for example, IP destination addresses) of the packets. As is made clearer below, the first router 7 can be accessed both by the packets relating to the television signal leaving the encoder 3 and by packets relating to other signals present on the local area network 6.

In one particular embodiment, the first router 7 is a commercially available device, marketed by Cisco under the name 7120-E3.

The first router 7 is connected to a transmission channel formed, in the example, by the wide area network (WAN) 13.

The wide area network 13 comprises a transmitter device 8, a guided transmission means 9, and a receiver device 10.

The first router 7 is connected to the transmitter device 8 through an E3 type serial communication interface 14 (for example, a coaxial cable), in other words one conforming to the E3 European standard format for digital transmission. For example, this coaxial cable 14 permits transmission at a speed of 34 Mb/s.

The guided transmission means 9 is preferably formed from one or more optical fibres.

A first end 9' of the optical fibre 9 is suitably coupled to the transmitter device 8.

If an optical fibre is used, the transmitter device 8 is capable of carrying out an electro-optical conversion of the television signal leaving the first router 7. For this purpose, the transmitter device 8 is provided with a laser for generating an optical beam (for example, a laser diode, which is not shown). The transmitter device 8 can also be used to suitably modulate the optical beam in such a way as to obtain an output optical signal suitable for propagation along the optical fibre 9. For example, amplitude modulation, frequency modulation or phase modulation methods can be used.

In one particular embodiment of the invention, the transmitter device 8 operates in accordance with the European hierarchy known as SDH (Synchronous Digital Hierarchy) and can produce at its output a signal of the STM-N (Synchronous Transport Module) type, where N represents the number of streams at 155 Mb/s.

Additionally this example of a transmitter 8 is of the ADM (Add and Drop Multiplexer) type and carries out operations of injecting the synchronous and/or plesiochronous tributary stream into the total STM-N stream, or removing it therefrom.

For example, the transmitter device 8 can be the commercially available ADM-1 device produced by Alcatel.

The optical fibre 9 can be, for example, a single-mode optical fibre of a conventional type.

Advantageously, the transmission channel implemented by means of the wide area network 13 provides a "clear channel" link. In other words, this transmission channel sets only the characteristics of the physical level (level 1 of the OSI model) while the protocols for other levels can be defined by the user of the system 1.

This transmission channel is associated with its own bandwidth. For example, the bandwidth of the channel is approximately 34 Mb/s.

According to the invention, a suitable portion of this bandwidth can be reserved for the transmission of the television signal. In other words, if other signals are transmitted simultaneously, the system 1 will be designed in such a way as to keep available for the television signal, structured in packets, an adequate portion of the bandwidth of the transmission channel implemented by means of the wide area network 13.

For example, this portion can be greater than or equal to the total band occupied by the television signal in packets transmitted over the wide area network 13.

A second end 9" of the optical fibre 9 is suitably coupled to the receiver device 10 which carries out the optical-electrical conversion of the signal received from the optical fibre 9 by means of a conventional detector device (not shown). Additionally, the receiver device 10 is capable of demodulating the received optical signal and supplying an electrical signal at its output.

This receiver device 10 can consist of an Alcatel ADM-1 model, similar to the transmitter device 8 described above. In this case, the receiver device 10 makes it possible to extract the synchronous or plesiochronous tributary stream from the aggregate stream received.

The receiver device 10 is connected to the second router 11, through a serial communication interface 15 similar to the interface 14 described above.

The second router 11 (of a type similar to the first router 7, for example) is designed to receive the packets routed to it by the first router 7 and to route them appropriately to the second local area network 12.

The second local area network 12 is, for example, a Fast Ethernet network similar to the first local area network 6.

A transmission means 16 of the local area network 12 connects the second router 11 to an input port 36 of a decoder 17.

The transmission means 16, which forms an output of the packet-switched network 5, is similar to the transmission means 4 described above.

The decoder 17, or another suitable processing means, is designed to receive at an input port 36 the television signal structured in packets sent from the first router 7, and to assemble them in such a way as to supply an undivided signal encoded according to the MPEG-2 standard. In this operation, the decoder 17 can eliminate any redundant bits (overhead) which may have been added by the communication protocols and by the error correction systems.

Additionally, the decoder 17 enables a decoding operation to be carried out on the MPEG-2 signal in such a way as to decompress it to restore the television signal with the initial transmission speed and, for example, with its two components of the SDI video signal and the analog audio signal.

The decoder 17 can consist of a Minerva VNP 201 encoder/decoder, similar to the encoder 3, and suitably configured.

The decoder 17 is provided with at least one output port 37 connected to the distribution station B. The connection between the output port 37 and the station B can be formed with suitable guide means, which may, for example, be similar to the means 2, and which are shown schematically in Figure 1 by an arrow 33.

If the distribution station B is also the broadcasting base, it is provided with a suitable aerial 18 for broadcasting the television signal.

It should be noted that the packet-switched network 5 can be more complex than that shown by way of example in the figures, and can comprise a plurality of branches intersecting each other at nodes. For example, the transmission channel 13 can comprise a plurality of lengths of optical fibre provided with corresponding transmitter and receiver devices and with further routers, located at the nodes of the network. These further routers can be used to route the plurality of packets to the second router 11 by selecting a suitable path over the network.

During operation, the transmission system 1 provides for the generation, at the station A, of a television contribution signal including, for example, a digital video signal and an analog audio signal.

This television contribution signal requires real time transmission and can be a "live" signal, in other words one produced live by suitable video cameras, or a prerecorded signal.

If the audio signal is analog, it is then converted to a digital signal by the encoder 3. The encoder 3 also compresses the video and audio signal according to the aforementioned MPEG-2 standard.

By means of the encoder 3, the television signal compressed according to the MPEG-2 standard is segmented and structured in a plurality of packets according to a level 3 communication protocol of the OSI model.

In this particular example, the level 3 communication protocol is the IP network protocol. Also, in the example, the encoder 3 processes the television signal according to the UDP transfer protocol.

Additionally, where specified, the encoder 3 introduces a suitable error correction system.

The plurality of packets relating to the television signal reaches the first router 7 via the Fast Ethernet local area network 6.

According to the destination address, the packets are routed to the second router 11 of the packet-switched network 5.

The plurality of packets is transmitted to the second router 11 via the wide area network 13.

The transmitter device 8 of the wide area network 13 receives the electrical signal corresponding to the said plurality of packets and generates a suitable optical signal which carries the information content of these packets and which is propagated along the optical fibre 9.

The receiver device 10 carries out an optical-electrical conversion and produces at one of its outputs a received electrical signal which is still in the form of a plurality of packets.

The second router 11 sends the received packets, via a local area network 12, to the decoder 17.

The decoder 17 assembles the packets structured according to the UDP/IP protocol in such a way as to reconstruct an undivided signal, and eliminates the redundant bits introduced by the communication protocols, and by the error correction system, if used.

Additionally, if an error correction system is used, the decoder 17 detects the erroneous packets and corrects them in such a way as to provide at the output a complete signal, in other words one essentially free of "freeze" or black signals.

Additionally, according to the described example, the said decoder 17 decodes the signal compressed according to the MPEG-2 standard in such a way as to restore on the output ports 37 the video and audio television signal transmitted initially. When necessary, the decoder 17 can carry out a digital/analog conversion of the audio signal.

The television signal including the video signal and the audio signal is sent to the distribution base B from which it can be broadcast in a conventional way. The distribution can take place immediately after the signal has been received at the station B, or this television signal can be stored for distribution at a later stage.

Additionally, instead of being broadcast by the station B after its output from the decoder 17, the said received signal can be retransmitted by conventional methods, such as radio or satellite links, to another broadcasting station.

It should be noted that the packet switching method allows the transmission speed of the television signal to be specified in a relatively flexible way.

In particular, it should be noted that, when the encoding speed of the television signal has been set according to the MPEG-2 standard, the structuring in packets according to the UDP/IP protocols increases the occupied band by only about 10%.

As mentioned above, this means that, in the case of a transmission channel (such as that associated with the optical fibre 9) having a given bandwidth (for example, 34 Mb/s), it is possible to set the transmission speeds of a plurality of television signals in such a way that they can be propagated simultaneously in this channel.

These signals can be a plurality of "live" transmissions or can comprise previously stored audio and video transmissions (known in this field as "remote transmission").

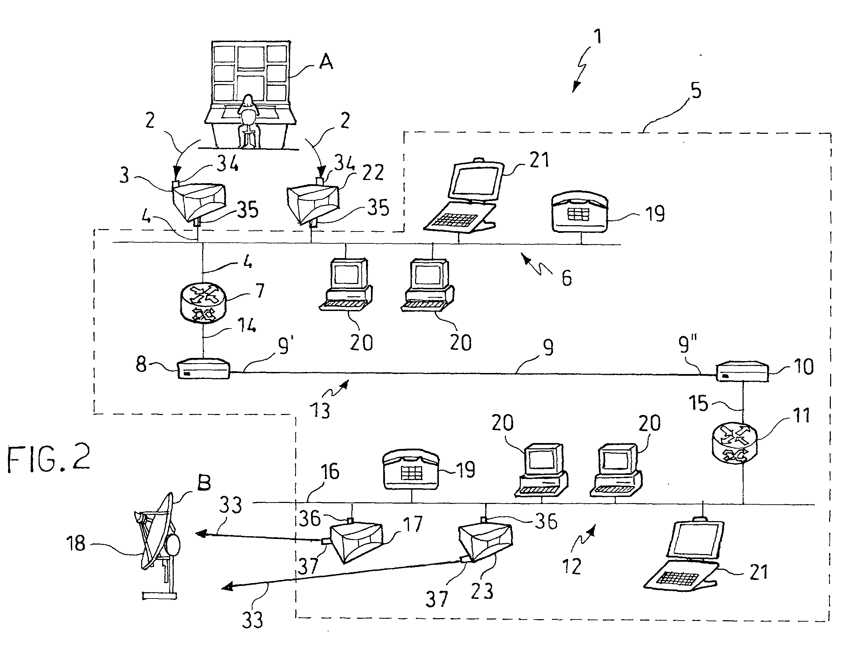

In this connection, as shown in Figure 2, the transmission system 1 can be used not only for television signal contribution but also for other applications.

Figure 2 shows the transmission system 1, similar to that described with reference to Figure 1 and comprising additional devices connected to the packet-switched network 5 and in particular to the local area networks 6 and 12. Components and devices similar to those described previously are indicated by the same numerical references in Figure 2.

In the example, each of the local area networks 6 and 12 is connected to a telephone 19, providing telephony via the IP protocol, processors 20 for applications between local area networks (LAN-to-LAN), and a video communication device 21. Additionally, each of the local area networks 6 and 12 is connected to a further encoder 22, connected to the generating station A, and a further decoder 23, connected to the distribution station B, these being similar, respectively, to the encoder 3 and the decoder 17 described above. The encoder 22 and the decoder 23 enable additional television signals to be transmitted from the generating station A to the distribution station B in a way similar to that described above.

The transmission, according to the IP protocol, of signals relating to the additional devices 19-23 listed above, is carried out by reserving suitable portions of the bandwidth of the optical fibre 9 for the transmission of the television signals generated by the base A.

The additional signals transmitted by the system 1 can also make use of a level 4 protocol other than the UDP, such as the TCP (Transmission Control Protocol).

It should be noted that contribution systems based on ATM technology are not capable of controlling signal transmissions relating to other applications on the same channel or on the same network.

According to another particular embodiment of the invention, in order to ensure continuity of the service in case of failure of the main link, the transmission system 1 can be constructed in a redundant version.

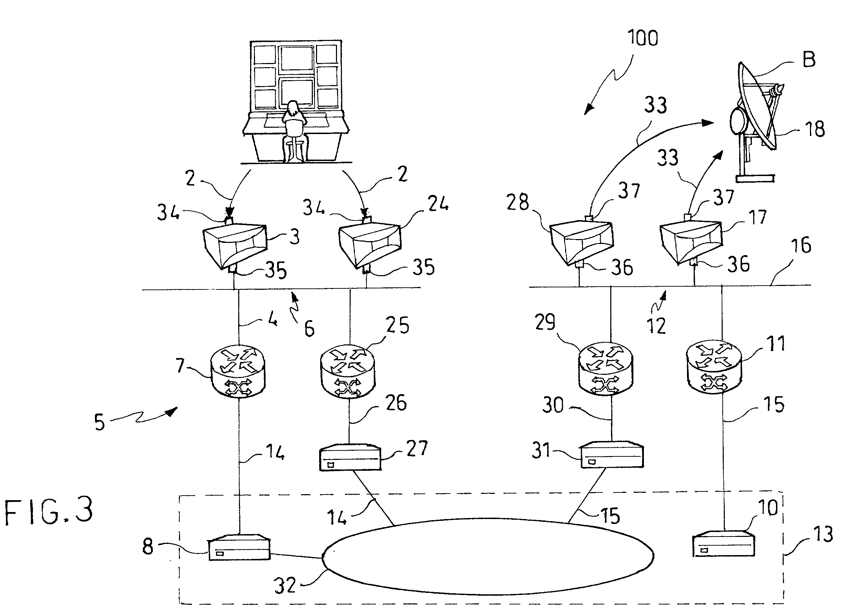

This version is shown schematically in Figure 3, which uses the same numerical references to indicate components similar to those defined previously.

The transmission system 100 of Figure 3 comprises a first redundant encoder 24 connected to the generating base A and, via the local area network 6, to a first redundant router 25. The redundant encoder 24 is connected to a redundant transmitter device 27, via a communications interface 26 similar to the interface 14 described above.

The transmission system 100 also comprises a second redundant encoder 28 connected to the distribution base B and connected, via the local area network 12, to a second redundant router 29. The second redundant router 29 is connected, via an interface means 30 similar to the interface 15, to a redundant receiver device 31.

In this case, the wide area network 13 comprises an optical fibre loop 32 to which the transmitter device 8 and the redundant device 27, and the receiver device 10 and the redundant device 31, are suitably connected.

The redundant encoders and decoders 24 and 28 and the redundant routers 25 and 29 and the redundant transmitter and receiver devices 27 and 30 can be identical to the devices having the same function described with reference to Figure 1.

It will be clear to a person skilled in the art that the redundant system can be activated wholly or partially, if there is a fault in the main transmission system.

A transmission system similar to the system 1 described with reference to Figures 1 and 2 has been constructed and tested in order to evaluate its performance.

This was because it was necessary to check whether the packet-switching technology was capable of providing a quality suitable for television contribution. It should be noted that, in the known art, this type of technology is used for low-profile transmission, in other words for transmission which does not require a high quality of the transmitted images.

In particular, the equipment indicated below and summarized subsequently was used: the encoder 3 and decoder 17 were two Minerva VNP 201 encoder/decoders; the first and second router 7 and 11 were two Cisco 7200-E3 routers; the transmitter device 8 and receiver device 10 were two Alcatel ADM-1 devices; there was a single-mode optical fibre link 9 with a length of several kilometres; and the bandwidth of the transmission channel formed by the transmitter device 8, the receiver device 10 and the optical fibre 9 was 34 Mb/s.

Additionally, the generating station A and the decoder 17 were located in the same base. The packet-switched network 5 used a transmission channel 13 comprising the optical fibre 9 and dedicated exclusively to transmission relating to these tests. In other words, the network 5 was not a public network. Transmission took place according to the IP and UDP protocols.

The transmission quality was evaluated by carrying out successive transmissions of television signals encoded by the encoder 3 at different encoding speeds and, therefore, with different transmission speeds of the output signal from the said encoder 3.

As stated previously, the encoding speed, in other words the speed at which the MPEG-2 encoding is carried out, is a parameter which can be set directly in the encoder 3. The transmission speed of the output signal from the encoder 3 is given by the encoding speed added to the overhead introduced by the packet-forming process and by the error correction system, if used.

In particular, the encoding speed was varied from 2 Mb/s to the maximum speed permitted by the particular encoder 3, equal to 15 Mb/s.

The transmission quality was evaluated, according to the usual practice in the field of television signal contribution, by observation of the received images, without the use of analytical instruments.

In greater detail, video signals containing images considered to be particularly critical, such as moving images with a significant variation between the content of one image and that of the next image, were transmitted in the test. In particular, images showing knitwear with very closely spaced rows, playing fields, and superimposed words in very small characters were used.

A person skilled in the art observed these television signals, while also stopping the image, in such a way as to obtain a detailed evaluation of their sharpness.

From the tests which were conducted, it was surprisingly found that the transmission system 1 implemented according to the invention provided a received signal quality which conformed to the television contribution standards.

In particular, a satisfactory quality of the contribution signal was observed when the encoding speed of the video signal was more than 3 Mb/s and when the encoding speed of the audio signal was more than 128 Kb/s. A higher transmission quality could be obtained when the encoding speed of the video signal was more than 5,8 Mb/s and when the encoding speed of the audio signal was more than 384 Kb/s.

The two values of 5,8 Mb/s and 384 kb/s also represent a convenient compromise between the received signal quality and the occupied bandwidth.

In the video signal alone, a particularly high quality was observed at an encoding speed of approximately 8 Mb/s, and this quality could not be essentially improved by increasing the encoding speed.

It should be noted that the upper limit of the encoding speed can vary from the indicated value (15 Mb/s for the video signal) according to the possibilities provided by the particular type of encoder used and by the bandwidth available in the network used.

Additionally, a suitable protocol analyser (known as a "sniffer") was used to evaluate the actual bandwidth occupied by the signal transmitted over the network 5.

With reference to the values of 12 Mb/s for the video signal 384 Kb/s for the audio signal, a gross throughput (in other words, the actual transmission speed, including every bit or byte sent in the unit of time) of approximately 13.6224 Mb/s. This confirmed that the operations of segmenting and structuring in UDP/IP packets introduced an overhead of 10% of the original signal.

The performance of the transmission system according to the invention was also evaluated in the circumstances of the simultaneous transmission of a plurality of television signals or transmission of television signals simultaneously with additional signals such as telephony, video conferencing, LAN-to-LAN applications, or Internet access signals.

In this case also, the desired quality was obtained by reserving a portion of the bandwidth of the network 5 (particularly a portion of the transmission channel associated with the optical fibre 9) for the transmission of the television signal.

For example, a portion of the bandwidth of the optical fibre connection 9 with a suitably greater value than the 13.6224 Mb/s determined above was reserved for the transmission of the television signal. The remaining bandwidth of the optical fibre connection was used, wholly or partially, for the transmission of the additional signals.

It should be noted that the system 1 was implemented with equipment which had been available on the market individually, but which had been used up to the present time for types of transmission other than television contribution, requiring lower quality. This demonstrates that the positive outcome of the tests was not only not predictable, but also disproved the preconceptions of practitioners in this field.

These experiments proved that, contrary to preconceptions in this field, the packet-switching technology, particularly the technology using the UDP/IP protocols, could be used with excellent results in television contribution.

The teachings of the present invention show that it is no longer necessary to control the television contribution signal exclusively with special transmission technologies (which are frequently complicated and costly), and that the more flexible and less costly technology currently considered to be the de facto standard in the world of ICT (Information & Communication Technology) can be used, without significant penalties in terms of quality.

The possibility of simultaneous transmission with other television signals or with other applications considerably reduces the costs of the system 1, such as those of implementation, or of the leasing of equipment or transmission means, owing to the multiplicity of services which can also be used at times when the system is not being used for television contribution.

The control of the television signal by means of the IP protocol represents a real advance towards the convergence and integration of the technologies of television with those of the Internet.

Clearly, a person skilled in the art can modify and vary the transmission system described above in numerous ways in order to meet contingent and specific requirements, all these modifications and variations being included within the scope of the invention, as defined by the following claims.

## Claims

1. Transmission system (1,100) applicable to television signal contribution, the said system being **characterized in that** it comprises:
- first processing means (3) provided with at least a first input port (34) connectable to a generating station (A) for the television signal and a first output port (35), the said first means (3) being used to supply to the first output port (35), on the basis of the said television signal to be transmitted, a digital output signal in the form of a plurality of packets structured in accordance with a communication protocol of a type according to level 3 of the OSI model (Open System Interconnection),
- a packet-switched network (5) having an input (4) connected to the first output port (35) and such that it permits the transmission of the said digital signal to an output (16) according to the said protocol, the said network having an associated bandwidth including at least one portion designed to be reserved for the transmission of the plurality of packets.

2. Transmission system according to Claim 1, in which the said television signal to be transmitted is associated with an initial transmission speed and the said first processing means (3) are also such that the said signal is encoded to reduce the said initial speed.

3. Transmission system (1,100) according to Claim 1, additionally comprising second processing means (17) provided with a second input port (36) connectable to the said output (16) and at least one second output port (37) connectable to a distribution station (B) for the television signal, the said second means (17) enabling the plurality of packets to be received and assembled in such a way as to supply to the said at least one second output port (37) a received television signal in undivided form.

4. Transmission system (1,100) according to Claims 2 and 3, in which the said second processing means (17) can be used for an operation of decoding the said digital signal to obtain a received television signal having a transmission speed essentially equal to the said initial speed.

5. Transmission system (1,100) according to Claim 1, in which the said level 3 communication protocol is the IP (Internet Protocol) network level protocol.

6. Transmission system (1,100) according to Claim 1, in which the said first processing means (3) can also be used to supply the output digital signal in accordance with a level 4 protocol of the OSI model.

7. Transmission system (1,100) according to Claim 6, in which the said level 4 protocol is the transport protocol known as UDP (User Datagram Protocol).

8. Transmission system (1,100) according to Claim 1, in which the said packet-switched network comprises at least one transmission channel (13) including a guided transmission means (9).

9. Transmission system (1,100) according to Claim 8, in which the said guided transmission means comprises at least one length of optical fibre (9).

10. Transmission system (1,100) according to Claim 1, in which the said network (5) is provided with a first router device (7) connected to the first output port (35) of the said first means (3) and designed to route the plurality of packets.

11. Transmission system (1,100) according to Claim 9, in which the said network comprises:
- a transmitter device (8) connected to a first end (9') of the said at least one optical fibre (9) to generate from the said output digital signal an optical signal designed to be propagated along the said at least one optical fibre (9),
- a receiver device (10) connected to a second end (9") of the said at least one optical fibre (9) to receive the optical signal and convert it to electrical form.

12. Transmission system (1,100) according to Claim 1, in which the said packet-switched network (5) enables at least one additional signal to be transmitted simultaneously with the transmission of the said television signal, the said additional signal being in the form of a further plurality of packets structured in accordance with the said level 3 protocol.

13. Transmission system (1,100) according to Claim 12, in which the said at least one additional signal relates to an application belonging to the group comprising: transmission of an additional television signal, telephony, video communication, applications between local area networks (LAN-to-LAN), and applications of the IP (Internet Protocol) type.

14. Transmission system (1,100) according to Claim 1, in which the said first processing means (3) can be used to apply an error correction system to the plurality of packets and the said second processing means (17) can be used to correct the errors in the plurality of received packets.

15. Transmission method applicable to television signal contribution, the said method being **characterized in that** it comprises the steps of:
- generating from the said television signal an output digital signal in the form of a plurality of packets structured in accordance with a level 3 communication protocol of the OSI (Open System Interconnection) model; the said plurality of packets being designed to be sent over a packet-switched network having an associated bandwidth,
- reserving a portion of the bandwidth of the network for the transmission of the plurality of packets,
- transmitting the said output digital signal over the network in accordance with the said protocol.

16. Method according to Claim 15, additionally comprising a step of generating the said television signal in a generating station.

17. Method according to Claim 16, comprising a step of encoding the television signal to supply the output digital signal at a lower transmission speed than the initial transmission speed of the television signal.

18. Method according to Claim 15, additionally comprising a step of receiving the said plurality of packets transmitted over the network e assembling them to obtain an undivided received signal.

19. Method according to Claim 17, comprising a step of receiving the said digital signal transmitted over the network and decoding it to obtain an undivided received signal having a transmission speed essentially equal to the said initial speed.

20. Method according to Claim 19, comprising a step of distributing the undivided received signal by means of a distribution station.

21. Method according to Claim 15, comprising, before the said transmitting step, a step of additionally generating the output digital signal in accordance with a level 4 protocol.

22. Method according to Claim 15, in which the said level 3 protocol is the IP protocol (Internet Protocol).

23. Method according to Claim 17, in which the television signal comprises a video signal and an audio signal.

24. Method according to Claim 23, in which the step of encoding the video signal is carried out at an encoding speed in the range from 3 Mb/s to 15 Mb/s.

25. Method according to Claim 24, in which the step of encoding the video signal is carried out at an encoding speed in the range from 5,8 Mb/s to 15 Mb/s.

26. Method according to Claim 25, in which the step of encoding the video signal is carried out at an encoding speed of approximately 8 Mb/s.
